(19) Europäisches Patentamt
European Patent Office
Office européen des brevets

(11) **EP 2 774 904 B1**

(12) **EUROPEAN PATENT SPECIFICATION**

(45) Date of publication and mention
of the grant of the patent:
**24.05.2017 Bulletin 2017/21**

(51) Int Cl.:
*C04B 35/468* *(2006.01)*    *H01C 7/02* *(2006.01)*
*H01C 17/065* *(2006.01)*    *H01C 17/30* *(2006.01)*

(21) Application number: **12845528.4**

(22) Date of filing: **03.10.2012**

(86) International application number:
**PCT/JP2012/075644**

(87) International publication number:
**WO 2013/065441 (10.05.2013 Gazette 2013/19)**

(54) **PTC THERMISTOR AND METHOD FOR MANUFACTURING PTC THERMISTOR**

PTC-THERMISTOR UND VERFAHREN ZUR HERSTELLUNG DES PTC-THERMISTORS

THERMISTOR CTP ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.11.2011 JP 2011240315**

(43) Date of publication of application:
**10.09.2014 Bulletin 2014/37**

(73) Proprietor: **Murata Manufacturing Co., Ltd.
Nagaokakyo-shi, Kyoto 617-8555 (JP)**

(72) Inventor: **MATSUNAGA, Tatsuya
Nagaokakyo-shi
Kyoto 617-8555 (JP)**

(74) Representative: **Behr, Wolfgang et al
Lorenz Seidler Gossel
Rechtsanwälte Patentanwälte
Partnerschaft mbB
Widenmayerstraße 23
80538 München (DE)**

(56) References cited:
**WO-A1-2004/110952    JP-A- H02 192 457
JP-A- H02 192 457     JP-A- H04 104 951
JP-A- H09 320 809     JP-A- H09 320 809
JP-A- 2000 247 734    JP-A- 2001 206 766
US-A1- 2010 029 464**

**Description**

TECHNICAL FIELD

The present invention relates to a PTC thermistor which includes a barium titanate-based semiconductor ceramic with positive resistance-temperature characteristics.

BACKGROUND ART

As barium titanate-based semiconductor ceramic compositions with positive resistance-temperature characteristics, semiconductor ceramic compositions are known as described in, for example, Patent Document 1.

The semiconductor ceramic composition in Patent Document 1 is a semiconductor ceramic composition with positive resistance-temperature characteristics, which contains barium titanate as its main constituent, and contains 20 to 30 mol of strontium titanate and 0.05 to 0.20 mol of calcium titanate, as well as 0.05 to 0.15 mol of manganese oxide, 2.5 to 3.5 mol of silicon oxide, and 0.25 to 0.30 mol of an oxide of a rare-earth element, when barium titanate is regarded as 100 mol.

This semiconductor ceramic composition in Patent Document 1 is supposed to be capable of being used in a preferred manner for PTC thermistors that are low in resistance and high in withstand voltage, which are also capable of being used under high load, such as office automation equipment and mortors, as overcurrent protection elements.

However, the semiconductor ceramic composition in Patent Document 1 has a problem that it is not always possible to achieve adequate characteristics as for PTC characteristics (characteristics associated with the magnitude of the change in resistance with a change in temperature, which are considered be improved as the change in resistance is increased with a change in temperature) that are required in order to enable highly accurate temperature detection for overheat detection, although the composition achieves the characteristics of low resistance and high withstand voltage.

Therefore, actually, in the case of using the semiconductor ceramic composition in Patent Document 1, it is impossible to achieve any PTC thermistor for use in overheat detection, which has desirable characteristics.

PRIOR ART DOCUMENTS

PATENT DOCUMENTS

Patent Document 1: Japanese Patent Application Laid-Open No. 2005-1971

WO2004110952 discloses PTC thermistors based on a ceramic component comprises a barium titanate as a main component and relative to 100 moles of barium titanate, 0.05 to 0.20 moles of calcium titanate, 20 to 30 moles of strontium titanate, 0.05 to 0.15 moles of a manganese oxide and 0.25 to 0.30 moles of an oxide of a rare earth element as a semiconducting agent.

SUMMARY OF THE INVENTION

Problem to be solved by the invention

The present invention is intended to solve the problem mentioned above, and an object of the present invention is to provide a PTC thermistor which is low in room-temperature resistance, with adequate PTC characteristics for overheat detection, and capable of overheat detection around room temperature.

Means for solving the problem

In order to solve the problem mentioned above, a PTC thermistor according to the present invention is:

a PTC thermistor including a semiconductor ceramic body and an external electrode formed on the outer surface of the semiconductor ceramic body,
which is characterized in that:

the semiconductor ceramic body contains: a perovskite-type compound including Ba, Ti, Sr, and Ca; Mn; and a semiconducting agent,
when the total content of Ba, Sr, Ca, and the semiconducting agent in terms of parts by mole is regarded as 100, the Sr content a in terms of parts by mole and the Ca content b in terms of parts by mole satisfy:

12.5 ≤ b ≤ 17.5 in the case of 20.0 ≤ a ≤ 22.5; and
12.5 ≤ b ≤ 15.0 in the case of 12.5 ≤ a ≤ 25.0, and
when the total content of Ti and Mn in terms of parts by mole is regarded as 100, the Mn content c in terms of parts by mole satisfies: 12.5 ≤ c ≤ 0.045.

In addition, in the PTC thermistor according to the present invention, the semiconductor ceramic body may be a stacked body including a stacked structure including a plurality of semiconductor ceramic layers and a plurality of internal electrodes, and having the semiconductor ceramic layers and the internal electrodes alternately stacked.

The constitution mentioned above can achieve a PTC thermistor which has a low room-temperature resistance, with adequate PTC characteristics for overheat detection, and makes overheat detection possible around room temperature.

In addition, the PTC thermistor according to the present invention is preferably used as an overheat detection element.

The use of the PTC thermistor according to the present invention as an overheat detection element can provide a PTC thermistor which is capable of ensuring overheat detection around room temperature.

Furthermore, a method for manufacturing a PTC thermistor according to the present invention is: a method for manufacturing a PTC thermistor including a semiconductor ceramic body, and an external electrode formed on the outer surface of the semiconductor ceramic body, which includes:

a step A of preparing an unfired semiconductor ceramic body;
a step B of firing the unfired semiconductor ceramic body to obtain a semiconductor ceramic body; and
a step C of forming an external electrode on the outer surface of the semiconductor ceramic body, and is characterized in that:

the unfired semiconductor ceramic body contains: a perovskite-type compound including Ba, Ti, Sr, and Ca; Mn; and a semiconducting agent,
when the total content of Ba, Sr, Ca, and the semiconducting agent in terms of parts by mole is regarded as 100, the Sr content a in terms of parts by mole and the Ca content b in terms of parts by mole satisfy:

12.5 ≤ b ≤ 17.5 in the case of 20.0 ≤ a ≤ 22.5; and
12.5 ≤ b ≤ 15.0 in the case of 12.5 ≤ a ≤ 25.0, and
when the total content of Ti and Mn in terms of parts by mole is regarded as 100, the Mn content c in terms of parts by mole satisfies:
12.5 ≤ c ≤ 0.045.

In addition, in the method for manufacturing a PTC thermistor according to the present invention, the unfired semiconductor ceramic body prepared in the step A may be an unfired stacked body including a stacked structure including a plurality of semiconductor ceramic green sheets and a plurality of unfired internal electrode patterns, and having the semiconductor ceramic green sheets and the unfired internal electrode patterns alternately stacked.

The constitution mentioned above can achieve a PTC thermistor which has a low room-temperature resistance, with adequate PTC characteristics for overheat detection, and makes overheat detection possible around room temperature.

Advantageous effect of the invention

The PTC thermistor according to the present invention, which includes a barium titanate-based semiconductor ceramic containing no lead, has low room-temperature resistance and adequate PTC characteristics for overheat detection, which have been conventionally difficult to achieve, thereby allowing overheat detection around room temperature.

It is to be noted that the overheat detection with the use of the PTC thermistor refers to detection of the circuit temperature upon reaching a predetermined temperature (in the case of reaching overheat that is an abnormal situation) with the use of the property that the resistance value of the PTC thermistor is rapidly increased from a specific temperature, and that the PTC thermistor for overheat detection refers to a PTC thermistor which serves the function of breaking the circuit with the use of a rapid increase in resistance.

The PTC thermistor according to the present invention can be used in a preferred manner, for example, as a protection element for a personal computer or the like, because the semiconductor ceramic which is used as the thermistor body with positive resistance-temperature characteristics is low in resistance around room temperature, capable of operating at low temperatures, and also excellent in resistance-temperature characteristics.

In addition, the method for manufacturing a PTC thermistor according to the present invention makes it possible to efficiently manufacture a PTC thermistor including a barium titanate-based semiconductor ceramic containing no lead, which has low room-temperature resistance and adequate PTC characteristics for overheat detection, which have been conventionally difficult to achieve.

BRIEF EXPLANATION OF DRAWINGS

FIG 1 is a perspective view illustrating the configuration of a PTC thermistor according to an embodiment of the present invention.
FIG 2 is a cross-sectional view illustrating the configuration of another PTC thermistor (stack-type PTC thermistor) according to an embodiment of the present invention.
FIG 3 is a diagram illustrating a temperature detection (overheat detection) circuit including a PTC thermistor according to the present invention.

MODE FOR CARRYING OUT THE INVENTION

Features of the present invention will be described in more detail with reference to embodiments of the present invention below.

[Embodiment 1]

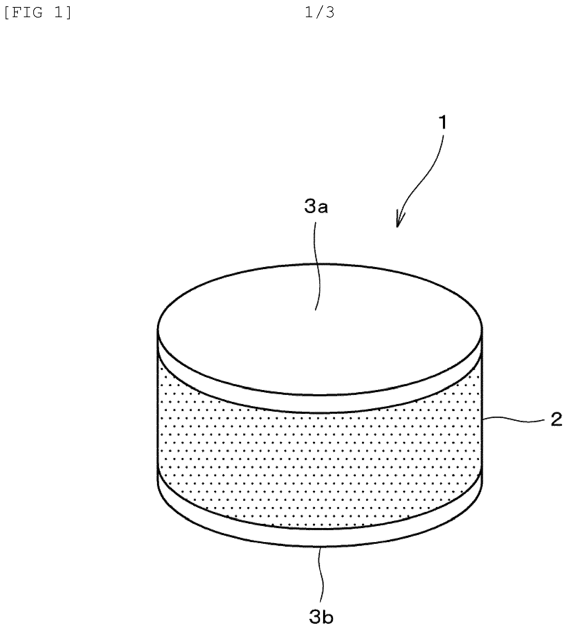

FIG 1 is a perspective view illustrating a PTC thermistor (positive characteristic thermistor) according to the present invention.
This PTC thermistor 1 has a pair of electrodes 3a, 3b respectively provided on front and back surfaces of a semiconductor ceramic body 2 (a thermistor body with positive resistance-temperature characteristics).
This PTC thermistor can be manufactured, for example, through:

(a) a step of preparing an unfired semiconductor ceramic body;
(b) a step of firing the unfired semiconductor ceramic body to obtain the semiconductor ceramic body 2 as shown in FIG 1;
(c) a step of forming the pair of electrodes 3a, 3b respectively on the front and back surfaces of the semiconductor ceramic body 2; etc.

The ceramic material constituting the semiconductor ceramic body is a barium titanate-based semiconductor ceramic containing: a perovskite-type compound including Ba, Ti, Sr, and Ca; Mn; and a semiconducting agent.
The grounds for limitations on the content ratios for each constituent of the ceramic material (the barium titanate-based semiconductor ceramic with $BaTiO_3$ as a basic composition) constituting the semiconductor ceramic body will be described below along with the operation of the present invention.
The barium titanate-based semiconductor ceramic (hereinafter, also simply referred to as a "semiconductor ceramic") as a constituent material of the PTC thermistor mainly contains the perovskite-type compound. This can be confirmed by a method such as, for example, XRD.
In addition, as for the content ratios of the respective elements in the barium titanate-based semiconductor ceramic, quantitative analysis can be conducted by, for example, ICP (emission spectroscopic plasma analysis method) with a fired body of semiconductor ceramic dissolved.
Sr is added for shifting the Curie point of the barium titanate-based semiconductor ceramic to the lower temperature side. In regard to the content thereof, when the total content of Ba, Sr, Ca, and the semiconducting agent (Er in this embodiment) in terms of parts by mole is regarded as 100, a Sr content less than 20.0 (20.0 mol%) in terms of parts by mole results in insufficiently lowered Curie point even in the case of adjusting the relationship with the other constituents, thereby leading to unsuitability for operations around room temperature. In addition, a Sr content in excess of 25.0 (25.0 mol%) in terms of parts by mole causes a significant increase in resistivity even in the case of adjusting the relationship with the other constituents.
Ca is added for controlling the grain size of the barium titanate-based semiconductor ceramic. When the total content of Ba, Sr, Ca, and the semiconducting agent (Er in this embodiment) in terms of parts by mole is regarded as 100, a Ca content less than 12.5 (12.5 mol%) in terms of parts by mole results in a failure to improve resistance-temperature characteristics due to the acceptor effect of Ca as one of advantageous effects of the present invention, even in the case of adjusting the relationship with the other constituents. In addition, a Ca content in excess of 17.5 (17.5 mol%) in terms of parts by mole causes a significant increase in resistivity even in the case of adjusting the relationship with the other constituents.

The rare-earth element is added mainly as a semiconducting agent for lowering the resistance of the barium titanate-based semiconductor ceramic. The content thereof is affected by the type of the semiconducting element and the contents of the other elements such as Sr and Ca, and in many cases, when the total content of Ba, Sr, Ca, and the semiconducting agent (Er in this embodiment) in terms of parts by mole is regarded as 100, a content of the semiconducting agent in excess of 1.0 (1.0 mol%) in terms of parts by mole causes a significant increase in resistivity.

The Mn element is added mainly as an acceptor for improving the resistance-temperature characteristics of the barium titanate-based semiconductor ceramic. When the total content of Ti and Mn in terms of parts by mole is regarded as 100, a Mn content less than 0.03 (0.03 mol%) in terms of parts by mole results in an insignificant improvement in resistance-temperature characteristics. In addition, a Mn content in excess of 0.045 (0.045 mol%) in terms of parts by mole causes a significant increase in resistivity.

It is believed that the present invention produces the advantageous effects described above, because:

(a) in relation to ionic radius, the Ca element originally intended for substitutions at sites with the Ba element present causes substitutes at sites with the Ti element present to develop the acceptor effect from the charge balance; and
(b) the compositional design intended to adjust the crystal lattice constant in detail provides both the sites with the Ba element present and the sites with the Ti element present as a region that can be substituted with the Ce element in an autogenous control manner, thereby suppressing a marked increase in resistance at room temperature.

The semiconductor ceramic constituting the semiconductor ceramic body 2 is prepared by the method described below with the use of the barium titanate-based semiconductor ceramic described above.

In addition, the electrodes 3a, 3b are electrodes which have a two-layer structure obtained by forming a Ni layer on both of the front and back principal surfaces of the semiconductor ceramic body 2, and then further forming an Ag layer as an outermost electrode layer on the Ni layers.

A method for manufacturing the PTC thermistor will be described below.

First, the following raw materials were prepared as raw materials for the barium titanate-based semiconductor ceramic for the semiconductor ceramic body 2.

$BaCO_3$, $TiO_2$, $SrCO_3$, and $CaCO_3$ were used as raw materials for the main constituent, and $Er_2O_3$ was used as the semiconducting agent.

However, as the semiconducting agent, it is also possible to use, in place of Er ($Er_2O_3$), a rare-earth element such as Y, La, Ce, Pr, Nd, Sm, Eu, Gd, Tb, Dy, Ho, Er, Tm, Yb, and Lu, or an oxide of at least one element selected from quinquevalent elements, such as Sb, Nb, Ta, W, and Bi.

Furthermore, $MnCO_3$ (resistance-temperature coefficient improving agent) and $SiO_2$ (sintering aid) were each prepared as other additives.

The respective raw materials mentioned above were blended in desired proportions as shown in Tables 1A to 1E, and subjected to wet grinding and mixing along with pure water and zirconia balls in a polyethylene pot, thereby providing a mixture slurry.

Next, the obtained mixture slurry was dehydrated and dried, and then subjected to calcination at 1200°C.

Thereafter, the calcined product was mixed with a binder, and then subjected to granulation, and the granulated particles obtained were used to obtain a disk-shaped compact of 2 mm in thickness and 14 mm in diameter by uniaxial pressing.

Next, the obtained compact was placed in a sagger made of a material containing $Al_2O_3$, $SiO_2$, and ZrO as main constituents, and subjected to firing (main firing) in the atmosphere for 2 hours at 1350°C to obtain a semiconductor ceramic body (a thermistor body with positive resistance-temperature characteristics).

Then, the pair of electrodes (Ni-Ag electrodes) 3a, 3b was formed respectively on front and back surfaces of the semiconductor ceramic body.

It is to be noted that the Ni-Ag electrodes 3a, 3b were formed through a step of forming Ni layers as ohmic electrode layers, and then further forming Ag layers as outermost electrode layers on the Ni layers.

For each of the thus prepared samples (PTC thermistors), a multimeter (334401A from Agilent) was used to measure the current value in the case of applying a voltage at room temperature (25°C), and calculate the resistivity ($\rho_{25°C}$).

Next, while varying the temperature from 20°C to 250°C with the respective samples mentioned above in a constant-temperature bath, the resistivity was calculated in the same manner to obtain resistance-temperature curves. Then, the temperatures (doubling point) at which the resistivity was twice as high as the resistivity at room temperature (25°C) were figured out from the resistance-temperature curves. It is to be noted that the doubling point refers to a phase transition temperature at which PTC characteristics start to be developed, which is supposed to indicate a value nearly close to the Curie point.

In addition, the temperatures T1 and T2 at which the resistivity was respectively 10 times (R1) and 100 times (R2) as high as the resistivity at room temperature (25°C) were figured out from the resistance-temperature curves, and on the basis of the following calculation formula, the resistance-temperature coefficient $\alpha_{10\text{-}100}$ was calculated, and regarded as an index.

$$\alpha_{10\text{-}100} = \{ \text{In } 10 \times (LogR2 - LogR1)/(T2 - T1) \times 100 \}$$

Furthermore, in general, the resistivity varies in an exponential fashion, and higher-resistivity materials have higher resistance-temperature coefficients, and thus, the $\{\alpha_{10\text{-}100}/Log(\rho_{25°C})\}$ was quantified as a higher-accuracy resistance-temperature coefficient, which was also regarded as an index.

Further, for each sample, the granulated particles before the main firing and the semiconductor ceramic body after the main firing were dissolved, and subjected to an ICP analysis to confirm that the samples were almost the same in composition as shown in Tables 1A to 1E.

Further, due to the fact that the changed additive amount of Er as a donor significantly varies the resistivity value of the material (semiconductor ceramic body), in order to allow comparisons on the same basis, various samples that were different in donor amount were evaluated to compare characteristics among samples with the Er amount (Er-$\rho_{min}$) representing the minimum value of the resistivity.

The measurement results for each of the samples mentioned above are shown in Tables 1A, 1B, 1C, 1D, and 1E.

It is to be noted that in Tables 1A to 1E, Ba in terms of parts by mole indicates the value of the Ba content in terms of parts by mole in the case of regarding the total content of Ba, Sr, Ca, and the semiconducting agent (Er in this embodiment) in terms of parts by mole as 100.

In addition, Ti in terms of parts by mole in Tables 1A to 1E indicates the value of the Ti content in terms of parts by mole in the case of regarding the total content of Ti and Mn in terms of parts by mole as 100.

In addition, Sr, Ca, and the semiconducting agent (Er in this embodiment) in terms of parts by mole in Tables 1A to 1E respectively indicate the values of the Sr content, Ca content, and semiconducting agent (Er in this embodiment) content in terms of parts by mole in the case of regarding the total content of Ba, Sr, Ca, and the semiconducting agent (Er in this embodiment) in terms of parts by mole as 100.

In addition, Mn in terms of parts by mole in Tables 1A to 1E indicates the value of the Mn content in terms of parts by mole in the case of regarding the total content of Ti and Mn in terms of parts by mole as 100.

It is to be noted that the mark "-" is put in the relevant space for the sample resulting in a failure to measure the resistance-temperature characteristics because of the high resistance of the sample, and as a result, a failure to figure out the $\{\alpha_{10\text{-}100}/Log (\rho_{25°C})\}$.

In addition, in Tables 1A, 1B, 1C, 1D, and 1E, the samples of sample numbers marked with "*" refer to samples according to comparative examples which fail to meet the requirements of the present invention.

[Table 1A]

| Sample Number | Ba [parts by mole] | Ti [parts by mole] | Sr [parts by mole] | Ca [parts by mole] | Mn [parts by mole] | Er_$\rho_{min}$ [parts by mole] | $\rho$ 25°C [$\Omega\cdot$m] | Doubling Point [°C] | $\alpha$10-100 [%/°C] | ($\alpha$10-100/ Log$\rho$ 25°C) |
|---|---|---|---|---|---|---|---|---|---|---|
| 107* | 69.80 | 99.975 | 17.5 | 12.5 | 0.025 | 0.20 | 5.0 | 67.3 | 6.8 | 9.7 |
| 108* | 69.80 | 99.970 | 17.5 | 12.5 | 0.030 | 0.20 | 6.0 | 67.5 | 7.2 | 9.3 |
| 109* | 69.75 | 99.965 | 17.5 | 12.5 | 0.035 | 0.25 | 6.5 | 67.1 | 7.8 | 9.6 |
| 110* | 69.75 | 99.960 | 17.5 | 12.5 | 0.040 | 0.25 | 10.6 | 67.2 | 8.9 | 8.7 |
| 111* | 69.70 | 99.955 | 17.5 | 12.5 | 0.045 | 0.30 | 11.1 | 67.5 | 9.1 | 8.7 |
| 112* | 69.70 | 99.950 | 17.5 | 12.5 | 0.050 | 0.30 | 20.0 | 67.7 | 10.8 | 8.3 |
| 113* | 67.25 | 99.975 | 17.5 | 15.0 | 0.025 | 0.25 | 5.9 | 62.3 | 7.6 | 9.9 |
| 114* | 67.25 | 99.970 | 17.5 | 15.0 | 0.030 | 0.25 | 6.7 | 62.5 | 7.9 | 9.5 |
| 115* | 67.25 | 99.965 | 17.5 | 15.0 | 0.035 | 0.25 | 7.2 | 62.4 | 8.1 | 9.5 |
| 116* | 67.25 | 99.960 | 17.5 | 15.0 | 0.040 | 0.25 | 10.6 | 62.1 | 10.1 | 9.9 |
| 117* | 67.20 | 99.955 | 17.5 | 15.0 | 0.045 | 0.30 | 12.5 | 62.7 | 10.3 | 9.4 |

(continued)

| Sample Number | Ba [parts by mole] | Ti [parts by mole] | Sr [parts by mole] | Ca [parts by mole] | Mn [parts by mole] | Er_ρ$_{min}$ [parts by mole] | ρ25°C [Ω·m] | Doubling Point [°C] | α10-100 [%/°C] | (α10-100/ Logρ 25°C) |
|---|---|---|---|---|---|---|---|---|---|---|
| 118* | 67.20 | 99.950 | 17.5 | 15.0 | 0.050 | 0.30 | 23.6 | 62.8 | 11.8 | 8.6 |
| 119* | 64.75 | 99.975 | 17.5 | 17.5 | 0.025 | 0.25 | 8.0 | 57.2 | 8.8 | 9.7 |
| 120* | 64.75 | 99.970 | 17.5 | 17.5 | 0.030 | 0.25 | 8.9 | 57.3 | 9.4 | 9.9 |
| 121* | 64.75 | 99.965 | 17.5 | 17.5 | 0.035 | 0.25 | 10.7 | 57.5 | 10.1 | 9.8 |
| 122* | 64.75 | 99.960 | 17.5 | 17.5 | 0.040 | 0.25 | 12.8 | 57.8 | 10.8 | 9.8 |
| 123* | 64.70 | 99.955 | 17.5 | 17.5 | 0.045 | 0.30 | 18.0 | 57.9 | 12.4 | 9.9 |
| 124* | 64.65 | 99.950 | 17.5 | 17.5 | 0.050 | 0.35 | 50.0 | 57.1 | 13.9 | 8.2 |

[Table 1B]

| Sample Number | Ba [parts by mole] | Ti [parts by mole] | Sr [parts by mole] | Ca [parts by mole] | Mn [parts by mole] | Er_ρ$_{min}$ [parts by mole] | ρ25°C [Ω·m] | Doubling Point [°C] | α10-100 [%/°C] | (α10-100/ Logρ 25°C) |
|---|---|---|---|---|---|---|---|---|---|---|
| 201* | 69.75 | 99.975 | 20.0 | 10.0 | 0.025 | 0.25 | 9.8 | 60.5 | 6.0 | 6.1 |
| 202* | 69.75 | 99.970 | 20.0 | 10.0 | 0.030 | 0.25 | 11.2 | 60.4 | 7.9 | 7.5 |
| 203* | 69.75 | 99.965 | 20.0 | 10.0 | 0.035 | 0.25 | 13.8 | 60.1 | 10.9 | 9.6 |
| 204* | 69.75 | 99.960 | 20.0 | 10.0 | 0.040 | 0.25 | 20.4 | 60.0 | 12.8 | 9.8 |
| 205* | 69.70 | 99.955 | 20.0 | 10.0 | 0.045 | 0.30 | 21.0 | 60.0 | 11.9 | 9.0 |
| 206* | 69.60 | 99.950 | 20.0 | 10.0 | 0.050 | 0.40 | 33.0 | 59.2 | 14.8 | 9.7 |
| 207* | 67.30 | 99.975 | 20.0 | 12.5 | 0.025 | 0.20 | 10.0 | 55.0 | 7.9 | 7.9 |
| 208 | 67.30 | 99.970 | 20.0 | 12.5 | 0.030 | 0.20 | 11.5 | 54.8 | 11.6 | 10.9 |
| 209 | 67.25 | 99.965 | 20.0 | 12.5 | 0.035 | 0.25 | 14.2 | 55.0 | 12.7 | 11.0 |
| 210 | 67.25 | 99.960 | 20.0 | 12.5 | 0.040 | 0.25 | 21.0 | 55.2 | 14.2 | 10.7 |
| 211 | 67.20 | 99.955 | 20.0 | 12.5 | 0.045 | 0.30 | 22.2 | 55.5 | 14.7 | 10.9 |
| 212* | 67.15 | 99.950 | 20.0 | 12.5 | 0.050 | 0.35 | 37.0 | 55.0 | 14.9 | 9.5 |
| 213* | 64.80 | 99.975 | 20.0 | 15.0 | 0.025 | 0.20 | 11.5 | 49.8 | 9.9 | 9.3 |
| 214 | 64.80 | 99.970 | 20.0 | 15.0 | 0.030 | 0.20 | 12.8 | 50.0 | 12.1 | 10.9 |
| 215 | 64.75 | 99.965 | 20.0 | 15.0 | 0.035 | 0.25 | 15.8 | 49.6 | 13.4 | 11.2 |
| 216 | 64.75 | 99.960 | 20.0 | 15.0 | 0.040 | 0.25 | 22.0 | 50.0 | 14.7 | 11.0 |
| 217 | 64.70 | 99.955 | 20.0 | 15.0 | 0.045 | 0.30 | 25.0 | 51.0 | 15.5 | 11.1 |
| 218* | 64.65 | 99.950 | 20.0 | 15.0 | 0.050 | 0.35 | 42.0 | 50.0 | 15.2 | 9.4 |
| 219* | 62.30 | 99.975 | 20.0 | 17.5 | 0.025 | 0.20 | 13.9 | 45.0 | 11.3 | 9.9 |
| 220 | 62.30 | 99.970 | 20.0 | 17.5 | 0.030 | 0.20 | 15.2 | 45.7 | 13.6 | 11.5 |
| 221 | 62.30 | 99.965 | 20.0 | 17.5 | 0.035 | 0.20 | 16.4 | 45.0 | 13.7 | 11.3 |
| 222 | 62.30 | 99.960 | 20.0 | 17.5 | 0.040 | 0.20 | 25.1 | 44.9 | 16.8 | 12.0 |
| 223 | 62.25 | 99.955 | 20.0 | 17.5 | 0.045 | 0.25 | 32.0 | 44.8 | 16.5 | 11.0 |

(continued)

| Sample Number | Ba [parts by mole] | Ti [parts by mole] | Sr [parts by mole] | Ca [parts by mole] | Mn [parts by mole] | Er_$\rho_{min}$ [parts by mole] | $\rho$25°C [$\Omega \cdot$m] | Doubling Point [°C] | $\alpha$10-100 [%/°C] | ($\alpha$10-100/ Logp 25°C) |
|---|---|---|---|---|---|---|---|---|---|---|
| 224* | 62.15 | 99.950 | 20.0 | 17.5 | 0.050 | 0.35 | 88.6 | 45.0 | 18.9 | 9.7 |
| 225* | 59.80 | 99.975 | 20.0 | 20.0 | 0.025 | 0.20 | 85.0 | 40.0 | 15.8 | 8.2 |
| 226* | 59.80 | 99.970 | 20.0 | 20.0 | 0.030 | 0.20 | 115.0 | 39.2 | 16.8 | 8.2 |
| 227* | 59.80 | 99.965 | 20.0 | 20.0 | 0.035 | 0.20 | 140.0 | 40.0 | 17.1 | 8.0 |
| 228* | 59.80 | 99.960 | 20.0 | 20.0 | 0.040 | 0.20 | 220.0 | 40.2 | 19.5 | 8.3 |
| 229* | 59.75 | 99.955 | 20.0 | 20.0 | 0.045 | 0.25 | 312.0 | 40.3 | 20.8 | 8.3 |
| 230* | 59.70 | 99.950 | 20.0 | 20.0 | 0.050 | 0.30 | 540.0 | 40.5 | 21.1 | 7.7 |

[Table 1C]

| Sample Number | Ba [parts by mole] | Ti [parts by mole] | Sr [parts by mole] | Ca [parts by mole] | Mn [parts by mole] | Er_$\rho_{min}$ [parts by mole] | $\rho$25°C [$\Omega \cdot$m] | Doubling Point [°C] | $\alpha$10-100 [%/°C] | ($\alpha$10-100/ Logp 25°C) |
|---|---|---|---|---|---|---|---|---|---|---|
| 301* | 67.30 | 99.975 | 22.5 | 10.0 | 0.025 | 0.20 | 12.7 | 47.4 | 5.9 | 5.3 |
| 302* | 67.30 | 99.970 | 22.5 | 10.0 | 0.030 | 0.20 | 16.3 | 47.3 | 9.2 | 7.6 |
| 303* | 67.15 | 99.965 | 22.5 | 10.0 | 0.035 | 0.35 | 19.7 | 47.3 | 10.0 | 7.7 |
| 304* | 67.15 | 99.960 | 22.5 | 10.0 | 0.040 | 0.35 | 26.1 | 47.2 | 13.2 | 9.3 |
| 305* | 67.15 | 99.955 | 22.5 | 10.0 | 0.045 | 0.35 | 38.3 | 47.1 | 14.1 | 8.9 |
| 306* | 67.10 | 99.950 | 22.5 | 10.0 | 0.050 | 0.40 | 35.9 | 47.8 | 15.3 | 9.8 |
| 307* | 64.80 | 99.975 | 22.5 | 12.5 | 0.025 | 0.20 | 12.9 | 42.5 | 8.9 | 8.0 |
| 308 | 64.80 | 99.970 | 22.5 | 12.5 | 0.030 | 0.20 | 15.7 | 42.5 | 12.2 | 10.2 |
| 309 | 64.80 | 99.965 | 22.5 | 12.5 | 0.035 | 0.20 | 20.1 | 42.5 | 14.2 | 10.9 |
| 310 | 64.65 | 99.960 | 22.5 | 12.5 | 0.040 | 0.35 | 26.1 | 42.4 | 15.3 | 10.8 |
| 311 | 64.65 | 99.955 | 22.5 | 12.5 | 0.045 | 0.35 | 39.7 | 42.4 | 16.1 | 10.1 |
| 312* | 64.65 | 99.950 | 22.5 | 12.5 | 0.050 | 0.35 | 40.5 | 42.3 | 15.2 | 9.5 |
| 313* | 62.30 | 99.975 | 22.5 | 15.0 | 0.025 | 0.20 | 14.8 | 37.3 | 11.2 | 9.6 |
| 314 | 62.30 | 99.970 | 22.5 | 15.0 | 0.030 | 0.20 | 17.5 | 37.5 | 13.5 | 10.9 |
| 315 | 62.25 | 99.965 | 22.5 | 15.0 | 0.035 | 0.25 | 23.0 | 37.3 | 14.2 | 10.4 |
| 316 | 62.15 | 99.960 | 22.5 | 15.0 | 0.040 | 0.35 | 25.0 | 37.2 | 14.1 | 10.1 |
| 317 | 62.15 | 99.955 | 22.5 | 15.0 | 0.045 | 0.35 | 44.0 | 37.1 | 16.5 | 10.0 |
| 318* | 62.15 | 99.950 | 22.5 | 15.0 | 0.050 | 0.35 | 46.0 | 37.8 | 16.0 | 9.6 |
| 319* | 59.80 | 99.975 | 22.5 | 17.5 | 0.025 | 0.20 | 25.2 | 32.4 | 11.7 | 8.3 |
| 320 | 59.80 | 99.970 | 22.5 | 17.5 | 0.030 | 0.20 | 25.4 | 32.4 | 15.2 | 10.8 |
| 321 | 59.80 | 99.965 | 22.5 | 17.5 | 0.035 | 0.20 | 35.0 | 32.4 | 16.7 | 10.8 |
| 322 | 59.80 | 99.960 | 22.5 | 17.5 | 0.040 | 0.20 | 70.7 | 32.3 | 19.2 | 10.4 |
| 323 | 59.75 | 99.955 | 22.5 | 17.5 | 0.045 | 0.25 | 120.0 | 32.8 | 21.0 | 10.1 |

(continued)

| Sample Number | Ba [parts by mole] | Ti [parts by mole] | Sr [parts by mole] | Ca [parts by mole] | Mn [parts by mole] | Er_$\rho_{min}$ [parts by mole] | $\rho$ 25°C [Ω·m] | Doubling Point [°C] | α10-100 [%/°C] | (α10-100/ Logρ 25°C) |
|---|---|---|---|---|---|---|---|---|---|---|
| 324* | 59.70 | 99.950 | 22.5 | 17.5 | 0.050 | 0.30 | 200.0 | 32.2 | 22.3 | 9.7 |
| 325* | 57.35 | 99.975 | 22.5 | 20.0 | 0.025 | 0.15 | 130.0 | 27.0 | 19.8 | 9.4 |
| 326* | 57.35 | 99.970 | 22.5 | 20.0 | 0.030 | 0.15 | 137.2 | 27.1 | 20.1 | 9.4 |
| 327* | 57.25 | 99.965 | 22.5 | 20.0 | 0.035 | 0.25 | 241.7 | 27.6 | 22.1 | 9.3 |
| 328* | 57.20 | 99.960 | 22.5 | 20.0 | 0.040 | 0.30 | 580.3 | 27.9 | 22.4 | 8.1 |
| 329* | 57.15 | 99.955 | 22.5 | 20.0 | 0.045 | 0.35 | 1080.0 | 27.4 | - | - |
| 330* | 57.20 | 99.950 | 22.5 | 20.0 | 0.050 | 0.30 | 1115.7 | 27.8 | - | - |

[Table 1D]

| Sample Number | Ba [parts by mole] | Ti [parts by mole] | Sr [parts by mole] | Ca [parts by mole] | Mn [parts by mole] | Er_$\rho_{min}$ [parts by mole] | $\rho$ 25°C [Ω·m] | Doubling Point [°C] | α10-100 [%/°C] | (α10-100/ Logρ 25°C) |
|---|---|---|---|---|---|---|---|---|---|---|
| 401* | 64.70 | 99.975 | 25.0 | 10.0 | 0.025 | 0.30 | 18.9 | 34.9 | 6.8 | 5.3 |
| 402* | 64.65 | 99.970 | 25.0 | 10.0 | 0.030 | 0.35 | 17.2 | 34.8 | 7.2 | 5.8 |
| 403* | 64.65 | 99.965 | 25.0 | 10.0 | 0.035 | 0.35 | 16.9 | 34.9 | 8.6 | 7.0 |
| 404* | 64.65 | 99.960 | 25.0 | 10.0 | 0.040 | 0.35 | 23.4 | 34.8 | 9.9 | 7.2 |
| 405* | 64.65 | 99.955 | 25.0 | 10.0 | 0.045 | 0.35 | 34.5 | 35.2 | 12.1 | 7.9 |
| 406* | 64.75 | 99.950 | 25.0 | 10.0 | 0.050 | 0.25 | 48.8 | 35.4 | 13.5 | 8.0 |
| 407* | 62.25 | 99.975 | 25.0 | 12.5 | 0.025 | 0.25 | 20.0 | 29.9 | 10.5 | 8.1 |
| 408 | 62.15 | 99.970 | 25.0 | 12.5 | 0.030 | 0.35 | 20.8 | 29.5 | 13.2 | 10.0 |
| 409 | 62.15 | 99.965 | 25.0 | 12.5 | 0.035 | 0.35 | 22.0 | 30.1 | 14.0 | 10.4 |
| 410 | 62.15 | 99.960 | 25.0 | 12.5 | 0.040 | 0.35 | 23.4 | 30.4 | 13.7 | 10.0 |
| 411 | 62.15 | 99.955 | 25.0 | 12.5 | 0.045 | 0.35 | 100.0 | 30.6 | 20.2 | 10.1 |
| 412* | 62.15 | 99.950 | 25.0 | 12.5 | 0.050 | 0.35 | 200.0 | 30.3 | 22.0 | 9.6 |
| 413* | 59.80 | 99.975 | 25.0 | 15.0 | 0.025 | 0.20 | 25.8 | 24.8 | 13.8 | 9.8 |
| 414 | 59.80 | 99.970 | 25.0 | 15.0 | 0.030 | 0.20 | 36.7 | 24.7 | 15.6 | 10.0 |
| 415 | 59.75 | 99.965 | 25.0 | 15.0 | 0.035 | 0.25 | 52.0 | 25.1 | 17.2 | 10.0 |
| 416 | 59.70 | 99.960 | 25.0 | 15.0 | 0.040 | 0.30 | 66.2 | 25.2 | 18.4 | 10.1 |
| 417 | 59.70 | 99.955 | 25.0 | 15.0 | 0.045 | 0.30 | 120.0 | 25.3 | 21.8 | 10.5 |
| 418* | 59.65 | 99.950 | 25.0 | 15.0 | 0.050 | 0.35 | 589.0 | 24.6 | 24.0 | 8.7 |
| 419* | 57.30 | 99.975 | 25.0 | 17.5 | 0.025 | 0.20 | 74.0 | 19.8 | 18.2 | 9.7 |
| 420* | 57.30 | 99.970 | 25.0 | 17.5 | 0.030 | 0.20 | 84.0 | 19.7 | 18.8 | 9.8 |
| 421* | 57.30 | 99.965 | 25.0 | 17.5 | 0.035 | 0.20 | 116.0 | 19.5 | 20.1 | 9.7 |
| 422* | 57.30 | 99.960 | 25.0 | 17.5 | 0.040 | 0.20 | 190.0 | 19.4 | 21.7 | 9.5 |
| 423* | 57.25 | 99.955 | 25.0 | 17.5 | 0.045 | 0.25 | 300.0 | 20.5 | 22.2 | 9.0 |

(continued)

| Sample Number | Ba [parts by mole] | Ti [parts by mole] | Sr [parts by mole] | Ca [parts by mole] | Mn [parts by mole] | Er_$\rho_{min}$ [parts by mole] | $\rho$25°C [$\Omega\cdot$m] | Doubling Point [°C] | $\alpha$10-100 [%/°C] | ($\alpha$10-100/ Log$\rho$ 25°C) |
|---|---|---|---|---|---|---|---|---|---|---|
| 424* | 57.20 | 99.950 | 25.0 | 17.5 | 0.050 | 0.30 | 500.0 | 20.6 | 23.9 | 8.9 |
| 425* | 54.65 | 99.975 | 25.0 | 20.0 | 0.025 | 0.35 | 8550.0 | 14.9 | - | - |
| 426* | 54.75 | 99.970 | 25.0 | 20.0 | 0.030 | 0.25 | 10587.5 | 14.8 | - | - |
| 427* | 54.65 | 99.965 | 25.0 | 20.0 | 0.035 | 0.35 | 10579.5 | 15.3 | - | - |
| 428* | 54.70 | 99.960 | 25.0 | 20.0 | 0.040 | 0.30 | 32472.5 | 15.7 | - | - |
| 429* | 54.65 | 99.955 | 25.0 | 20.0 | 0.045 | 0.35 | 50400.0 | 15.1 | - | - |
| 430* | 54.70 | 99.950 | 25.0 | 20.0 | 0.050 | 0.30 | 48000.0 | 14.8 | - | - |

[Table 1E]

| Sample Number | Ba [parts by mole] | Ti [parts by mole] | Sr [parts by mole] | Ca [parts by mole] | Mn [parts by mole] | Er_$\rho_{min}$ [parts by mole] | $\rho$25°C [$\Omega\cdot$m] | Doubling Point [°C] | $\alpha$10-100 [%/°C] | ($\alpha$10-100/ Log$\rho$ 25°C) |
|---|---|---|---|---|---|---|---|---|---|---|
| 507* | 59.70 | 99.975 | 27.5 | 12.5 | 0.025 | 0.30 | 85.1 | 17.5 | 16.2 | 8.4 |
| 508* | 59.75 | 99.970 | 27.5 | 12.5 | 0.030 | 0.25 | 109.3 | 17.4 | 18.1 | 8.9 |
| 509* | 59.75 | 99.965 | 27.5 | 12.5 | 0.035 | 0.25 | 122.5 | 17.4 | 18.6 | 8.9 |
| 510* | 59.75 | 99.960 | 27.5 | 12.5 | 0.040 | 0.25 | 127.8 | 17.6 | 18.9 | 9.0 |
| 511* | 59.75 | 99.955 | 27.5 | 12.5 | 0.045 | 0.25 | 916.7 | 17.6 | 20.0 | 6.8 |
| 512* | 59.75 | 99.950 | 27.5 | 12.5 | 0.050 | 0.25 | 1847.1 | 17.5 | - | - |
| 513* | 57.25 | 99.975 | 27.5 | 15.0 | 0.025 | 0.25 | 172.3 | 12.4 | 19.2 | 8.6 |
| 514* | 57.30 | 99.970 | 27.5 | 15.0 | 0.030 | 0.20 | 288.4 | 12.6 | 20.2 | 8.2 |
| 515* | 57.25 | 99.965 | 27.5 | 15.0 | 0.035 | 0.25 | 411.0 | 12.8 | 20.2 | 7.7 |
| 516* | 57.30 | 99.960 | 27.5 | 15.0 | 0.040 | 0.20 | 435.8 | 12.1 | 20.4 | 7.7 |
| 517* | 57.25 | 99.955 | 27.5 | 15.0 | 0.045 | 0.25 | 1125.0 | 12.9 | - | - |
| 518* | 57.25 | 99.950 | 27.5 | 15.0 | 0.050 | 0.25 | 4714.3 | 12.3 | - | - |
| 519* | 54.80 | 99.975 | 27.5 | 17.5 | 0.025 | 0.20 | 2500.0 | 7.2 | - | - |
| 520* | 54.80 | 99.970 | 27.5 | 17.5 | 0.030 | 0.20 | 3300.0 | 6.9 | - | - |
| 521* | 54.80 | 99.965 | 27.5 | 17.5 | 0.035 | 0.20 | 4500.0 | 7.8 | - | - |
| 522* | 54.80 | 99.960 | 27.5 | 17.5 | 0.040 | 0.20 | 6000.0 | 7.9 | - | - |
| 523* | 54.80 | 99.955 | 27.5 | 17.5 | 0.045 | 0.20 | 11500.0 | 7.9 | - | - |
| 524* | 54.70 | 99.950 | 27.5 | 17.5 | 0.050 | 0.30 | 21000.0 | 6.8 | - | - |

From Tables 1A to 1E which show characteristics of the samples for each composition, it can be determined as follows.

As shown in Table 1A, in the case of samples of sample numbers 107 to 124 in which the Sr content in terms of parts by mole (the Sr content in terms of parts by mole in the case of regarding the total content of Ba, Sr, Ca, and the semiconducting agent (Er in this embodiment) in terms of parts by mole as 100) is 17.5 (17.5 mol%) in the semiconductor ceramic constituting the semiconductor ceramic body, due to the excessively low Sr content, the resistance doubling temperature (doubling point) indicating a value nearly close to the Curie point is unfavorably made significantly higher than room temperature to excessively increase the detection temperature for overheat detection.

In addition, as shown in Table 1E, in the case of samples of sample numbers 507 to 524 in which the Sr content in terms of parts by mole is 27.5 (27.5 mol%) in the case of regarding the total content of Ba, Sr, Ca, and the semiconducting agent (Er in this embodiment) in terms of parts by mole as 100, due to the excessively high Sr content, the doubling point is unfavorably lower than room temperature, also with high values for the resistivity $\rho_{25°C}$.

In the case of the following samples in which the Sr content in terms of parts by mole falls within the range of 20.0 to 25.0 (20.0 to 25.0 mol%) in the case of regarding the total content of Ba, Sr, Ca, and the semiconducting agent (Er in this embodiment) in terms of parts by mole as 100, with an appropriate combination of Ca and Mn amounts, that is, in the case of respective samples of:

sample numbers 208 to 211, 214 to 217, and 220 to 223 in Table 1B;
sample numbers 308 to 311, 314 to 317, and 320 to 323 in Table 1C; and
sample numbers 408 to 411 and 414 to 417 in Table 1D, it becomes possible to achieve a low resistivity of $\rho_{25°C} \leq$ 120 $\Omega$·cm, and the effect of highly improving the resistance-temperature characteristics is achieved. Specifically, the inequality of $10.0 \leq \{\alpha_{10-100}/Log\ (\rho_{25°C})\} \leq 12.0$ can be achieved.

Further, among the respective samples which can achieve preferred characteristics, in particular, in the case of samples in which the Sr content in terms of parts by mole meets the requirement of $20.0 \leq Sr \leq 22.5$ (20.0 mol% $\leq$ Sr $\leq$ 22.5 mol%), generally, larger values for the $\{\alpha_{10-100}/Log\ (\rho_{25°C})\}$ can be achieved than in the case of the samples in which the Sr content in terms of parts by mole is 25.0 (Sr = 25.0 mol%).

As is clear from the above-mentioned results, the semiconductor ceramic for use in the PTC thermistor according to the present invention is a barium titanate-based semiconductor ceramic that is capable of simultaneously achieving respective properties of low Curie point, low room-temperature resistance, and high resistance-temperature coefficient (that is, excellent PTC characteristics), and the use of the semiconductor ceramic can achieve PTC thermistors, in particular, temperature detection elements which are excellent in characteristics.

In addition, in the case of the barium titanate-based semiconductor ceramic for use in the PTC thermistor according to the present invention, the type and amount of the donor are capable of being changed in general ranges, and also in such cases, similar effects can be achieved.

In addition, while a case of adopting Ni-Ag electrodes as the electrodes constituting the PTC thermistor has been taken as an example and explained in the above-described embodiment, the electrode composition is also not particularly limited, and it is possible to apply electrodes of various compositions.

It is to be noted that while the PTC thermistor body formed with the use of the barium titanate-based semiconductor ceramic described above is disk-shaped in the above-described embodiment, the shape is not to be considered limited thereto, and it is also possible to adopt, for example, a rectangular shape.

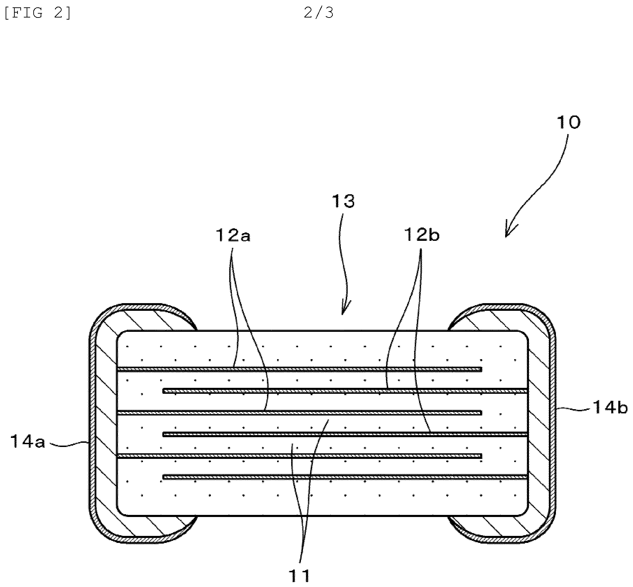

In addition, while the PTC thermistor structured to have the electrodes formed on both principal surfaces of the disk-shaped semiconductor ceramic body has been taken as an example and explained in the above-described embodiment, it is also possible to adopt a stack-type PTC thermistor as shown in FIG 2 in the present invention.

This stack-type PTC thermistor 10 in FIG 2 is structured to have external electrodes 14a, 14b provided on both ends of a stack-type semiconductor ceramic body 13 structured to have semiconductor ceramic layers 11 and internal electrodes 12a, 12b alternately stacked.

This stack-type PTC thermistor can be manufactured through: for example,

(a) a step of forming an unfired semiconductor ceramic body including a stacked body structured to have a plurality of semiconductor ceramic green sheets and a plurality of internal electrode patterns alternately stacked by alternately stacking semiconductor ceramic green sheets and unfired internal electrode patterns;
(b) a step of firing the unfired semiconductor ceramic body to obtain the semiconductor ceramic body 13 as shown in FIG 2;
(c) a step of forming the external electrodes 14a, 14b on the outer surface of the semiconductor ceramic body 13, etc.

[Temperature Detection (Overheat Detection) Circuit including PTC Thermistor according to Present Invention]

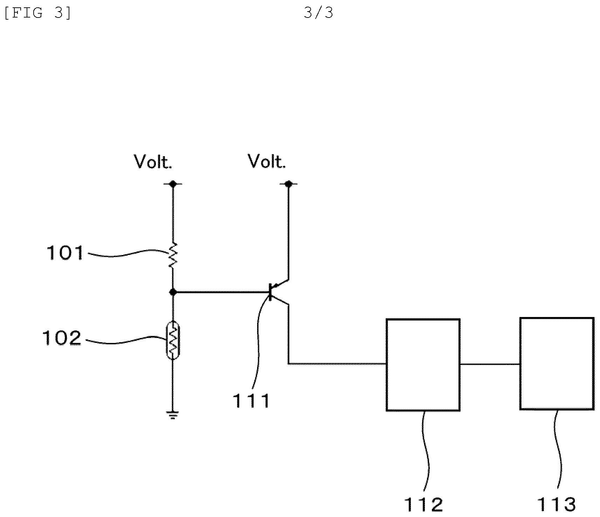

Furthermore, FIG 3 is a diagram illustrating a temperature detection (overheat detection) circuit including a PTC thermistor according to the present invention.

This temperature detection (overheat detection) circuit includes a resistor 101, a PTC thermistor 102, a transistor 111 with a base terminal connected between the resistor 101 and the PTC thermistor 102, a control integrated circuit 112 for outputting a control signal in response to voltage supply, and an integrated circuit 113 for power supply control for shutting down the system in response to the control signal.

It is to be noted that as the PTC thermistor 102, a thermistor is used which has the characteristics of being low in electrical resistance at ordinary temperature, and undergoing a rapid increase in electrical resistance on reaching a predetermined temperature.

In this temperature detection circuit, when the resistance value of the PTC thermistor 102 reaches a certain resistance value due to overheat, the transistor 111 is turned on to supply the specified voltage to the control integrated circuit 112. This temperature at which the transistor 111 is turned on is regarded as the detection temperature.

Then, the control integrated circuit 112 outputs a control signal in response to the voltage supply. The integrated circuit 113 for power supply control shuts down the system in response to the control signal. This shutdown will stop abnormal overheat to protect a device (for example, a personal computer) provided with the temperature detection (overheat detection) circuit from overheat.

In addition, the PTC thermistor and manufacturing method therefor according to the present invention are also not to be considered limited to the above-described embodiment in other respects, and various applications and modifications can be made within the scope of the present invention.

DESCRIPTION OF REFERENCE SYMBOLS

| | |
|---|---|
| 1 | PTC thermistor |
| 2 | semiconductor ceramic body |
| 3a, 3b | electrode |
| 10 | stack-type PTC thermistor |
| 11 | semiconductor ceramic layer |
| 12a, 12b | internal electrode |
| 13 | stack-type semiconductor ceramic body |
| 14a, 14b | external electrode |
| 101 | resistance |
| 102 | PTC thermistor |
| 111 | transistor |
| 112 | control integrated circuit |
| 113 | integrated circuit for power supply control |

**Claims**

1. A PTC thermistor comprising a semiconductor ceramic body and an external electrode formed on an outer surface of the semiconductor ceramic body,
   wherein the semiconductor ceramic body contains: a perovskite-type compound including Ba, Ti, Sr, and Ca; Mn; and a semiconducting agent, wherein
   the total content of Ba, Sr, Ca, and the semiconducting agent in terms of parts by mole being regarded as 100, the Sr content a in terms of parts by mole and the Ca content b in terms of parts by mole satisfy:

   $12.5 \leq b \leq 17.5$ in the case of $20.0 \leq a \leq 22.5$; and
   $12.5 \leq b \leq 15.0$ in the case of $12.5 \leq a \leq 25.0$, and
   the total content of Ti and Mn in terms of parts by mole being regarded as 100, the Mn content c in terms of parts by mole satisfies: $12.5 \leq c \leq 0.045$.

2. The PTC thermistor according to claim 1, wherein the semiconductor ceramic body is a stacked body including a stacked structure comprising a plurality of semiconductor ceramic layers and a plurality of internal electrodes, and having the semiconductor ceramic layers and the internal electrodes alternately stacked.

3. The PTC thermistor according to one of claims 1 and 2, which is used as an overheat detection element.

4. A method for manufacturing a PTC thermistor comprising a semiconductor ceramic body that contains a perovskite-type compound including Ba, Ti, Sr, and Ca; Mn; and a semiconducting agent, and an external electrode formed on an outer surface of the semiconductor ceramic body, the method comprising:

   a step A of preparing an unfired semiconductor ceramic body;

a step B of firing the unfired semiconductor ceramic body to obtain a semiconductor ceramic body; and
a step C of forming an external electrode on an outer surface of the semiconductor ceramic body,
wherein the unfired semiconductor ceramic body contains: a perovskite-type compound including Ba, Ti, Sr, and Ca; Mn; and a semiconducting agent, the total content of Ba, Sr, Ca, and the semiconducting agent in terms of parts by mole being regarded as 100, the Sr content a in terms of parts by mole and the Ca content b in terms of parts by mole satisfy:

$12.5 \leq b \leq 17.5$ in the case of $20.0 \leq a \leq 22.5$; and
$12.5 \leq b \leq 15.0$ in the case of $12.5 \leq a \leq 25.0$, and
the total content of Ti and Mn in terms of parts by mole being regarded as 100, the Mn content c in terms of parts by mole satisfies:

$12.5 \leq c \leq 0.045$.

**5.** The method for manufacturing a PTC thermistor according to claim 4, wherein the unfired semiconductor ceramic body prepared in the step A is an unfired stacked body including a stacked structure comprising a plurality of semiconductor ceramic green sheets and a plurality of unfired internal electrode patterns, and having the semiconductor ceramic green sheets and the unfired internal electrode patterns alternately stacked.

**Patentansprüche**

**1.** PTC-Thermistor aufweisend einen Halbleiterkeramikkörper und eine äußere Elektrode, die an einer Außenfläche des Halbleiterkeramikkörpers gebildet ist,
wobei der Halbleiterkeramikkörper enthält: einen Perovskit-artige Verbindung beinhaltend Ba, Ti, Sr, und Ca; Mn; und ein Halbleitermittel,
wobei,
wenn der Gesamtgehalt an Ba, Sr, Ca und dem Halbleitermittel in Molteilen als 100 betrachtet wird, der Sr-Gehalt a in Molteilen und der Ca-Gehalt b in Molteilen folgende Bedingungen erfüllen:

$12.5 \leq b \leq 17,5$ im Falle von $12.5 \leq a \leq 22,5$; und
$12.5 \leq b \leq 15,0$ im Falle von $12.5 \leq a \leq 25,0$, und
wenn der Gesamtgehalt von Ti und Mn in Molteilen als 100 betrachtet wird, der Mn-Gehalt c in Molteilen die Bedingung $12.5 \leq c \leq 0,045$ erfüllt.

**2.** PTC-Thermistor nach Anspruch 1, wobei der Halbleiterkeramikkörper ein Schichtkörper ist, der einen Schichtaufbau aufweisend eine Vielzahl von Halbleiterkeramikschichten und eine Vielzahl innerer Elektroden beinhaltet, und bei dem die Halbleiterkeramikschichten und die inneren Elektroden abwechselnd geschichtet sind.

**3.** PTC Thermistor nach einem der Ansprüche 1 und 2, der als Überhitzungsdetektionselement verwendet wird.

**4.** Verfahren zur Herstellung eines PTC Thermistors aufweisend einen Halbleiterkeramikkörper, der eine Perovskit-artige Verbindung beinhaltend Ba, Ti, Sr, und Ca; Mn; und ein Halbleitermittel aufweist, und wobei eine externe Elektrode an einer Außenfläche des Halbleiterkeramikkörpers gebildet ist, das Verfahren umfassend:

einen Schritt A des Herstellens eines ungebrannten Halbleiterkeramikkörpers;
einen Schritt B des Brennens des ungebrannten Halbleiterkeramikkörpers, um einen Halbleiterkeramikkörper zu erhalten; und
einen Schritt C des Bildens einer externen Elektrode an einer Außenfläche des Halbleiterkeramikkörpers,
wobei der ungebrannte Halbleiterkeramikkörper enthält:

eine Perovskit-artige Verbindung beinhaltend Ba, Ti, Sr, und Ca; Mn; und ein Halbleitermittel,

wobei, wenn der Gesamtgehalt an Ba, Sr, Ca, und dem Halbleitermittel in Molteilen als 100 betrachtet wird, der Sr-Gehalt a in Molteilen und der Ca-Gehalt b in Molteilen folgende Bedingungen erfüllen:

$12.5 \leq b \leq 17,5$ im Falle von $12.5 \leq a \leq 22,5$; und
$12.5 \leq b \leq 15,0$ im Falle von $12.5 \leq a \leq 25,0$, und

wenn der Gesamtgehalt von Ti und Mn in Molteilen als 100 betrachtet wird, der Mn-Gehalt c in Molteilen die Bedingung $12.5 \leq c \leq 0,045$ erfüllt.

5. Verfahren zur Herstellung eines PTC Thermistors gemäß Anspruch 4, wobei der ungebrannte Halbleiterkeramikkörper, der in Schritt A hergestellt wird, ein ungebrannter Schichtkörper ist, der einen Schichtaufbau aufweisend eine Vielzahl von keramische Halbleitergrünfolie und eine Vielzahl von ungebrannten inneren Elektrodenmustern beinhaltet, und bei dem die keramische Halbleitergrünfolien und die ungebrannten inneren Elektrodenmuster abwechselnd geschichtet sind.

**Revendications**

1. Thermistance à coefficient de température positif (CPT), comprenant un corps en céramique semi-conducteur et une électrode externe formée sur une surface extérieure du corps en céramique semi-conducteur,
   dans laquelle le corps en céramique semi-conducteur contient : un composé de type pérovskite incluant du Ba, Ti, Sr et Ca ; Mn ; et un agent semi-conducteur,
   dans lequel
   la teneur totale en Ba, Sr, Ca et en agent semi-conducteur en termes de parties par mole étant considérée comme 100, la teneur a en Sr en termes de parties par mole et la teneur b en Ca en termes de parties par mole satisfont :

   $12.5 \leq b \leq 17,5 \leq$ dans le cas de $12.5 \leq a \leq 22,5$, et
   $12.5 \leq b \leq 15,0 \leq$ dans le cas de $12.5 \leq a \leq 25,0$, et
   la teneur totale de Ti et Mn en termes de parties par mole étant considérée comme 100, la teneur c en Mn en termes de parties par mole satisfait :

   $12.5 \leq c \leq 0,045$.

2. Thermistance CPT selon la revendication 1, dans laquelle le corps en céramique semi-conducteur est un corps empilé incluant une structure empilée comprenant une pluralité de couches en céramique semi-conductrices et une pluralité d'électrodes internes, les couches en céramique semi-conductrices et les électrodes internes étant empilées de manière alternée.

3. Thermistance CPT selon la revendication 1 ou 2, utilisée comme élément de détection de surchauffe.

4. Procédé de fabrication d'une thermistance CPT comprenant un corps en céramique semi-conducteur qui contient un composé de type pérovskite incluant du Ba, Ti, Sr et Ca ; Mn ; et un agent semi-conducteur, et une électrode externe formée sur une surface extérieure du corps en céramique semi-conducteur,
   le procédé comprenant :

   une étape A pour préparer un corps en céramique semi-conducteur cru ;
   une étape B pour cuire le corps en céramique semi-conducteur cru afin d'obtenir un corps en céramique semi-conducteur, et
   une étape C pour former une électrode externe sur une surface extérieure du corps en céramique semi-conducteur,
   dans lequel le corps en céramique semi-conducteur cru content : un composé de type pérovskite incluant du Ba, Ti, Sr et Ca ; Mn ; et un agent semi-conducteur,
   la teneur totale de Ba, Sr, Ca et de l'agent semi-conducteur en termes de parties par mole étant considérée comme 100, la teneur a en Sr en termes de parties par mole et la teneur b en Ca en termes de parties par mole satisfont :

   $12,5 \leq b \leq 17,5 \leq$ dans le cas de $12.5 \leq a \leq 22,5$, et
   $12.5 \leq b \leq 15,0 \leq$ dans le cas de $12.5 \leq a \leq 25,0$, et

   la teneur totale de Ti et Mn en termes de parties par mole étant considérée comme 100, la teneur c en Mn en termes de parties par mole satisfait :

   $12.5 \leq c \leq 0,045$.

5. Procédé de fabrication d'une thermistance CPT selon la revendication 4, dans lequel le corps en céramique semi-conducteur cru préparé lors de l'étape A est un corps empilé cru incluant une structure empilée comprenant une pluralité de feuilles vertes en céramique semi-conductrices et une pluralité de motifs d'électrodes internes crus, les feuilles vertes en céramique semi-conductrices et les motifs d'électrodes internes crus étant empilés de manière alternée.

[FIG 1]                                           1/3

[FIG 2]                                        2/3

[FIG 3]                                    3/3

**EP 2 774 904 B1**

**REFERENCES CITED IN THE DESCRIPTION**

**Patent documents cited in the description**

- JP 2005001971 A

- WO 2004110952 A